(19) **Europäisches Patentamt European Patent Office Office européen des brevets**

(11) **EP 4 738 494 A1**

(12) **EUROPEAN PATENT APPLICATION**
published in accordance with Art. 153(4) EPC

(43) Date of publication:
06.05.2026 Bulletin 2026/19

(21) Application number: 24830457.8

(22) Date of filing: 07.06.2024

(51) International Patent Classification (IPC):
$H01M\ 10/04$ (2006.01)    $H01M\ 50/105$ (2021.01)

(52) Cooperative Patent Classification (CPC):
Y02E 60/10

(86) International application number:
PCT/CN2024/097916

(87) International publication number:
WO 2025/001811 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.06.2023 CN 202310802063

(71) Applicant: Ningde Amperex Technology Limited
Ningde, Fujian 352100 (CN)

(72) Inventors:
• HUANG, Zeyu
  Ningde, Fujian 352100 (CN)
• GUO, Peipei
  Ningde, Fujian 352100 (CN)
• LI, Hu
  Ningde, Fujian 352100 (CN)
• WANG, Huiling
  Ningde, Fujian 352100 (CN)

(74) Representative: Kraus & Lederer PartGmbB
Thomas-Wimmer-Ring 15
80539 München (DE)

(54) **ELECTRODE ASSEMBLY AND BATTERY CELL**

(57) This application discloses an electrode assembly and a battery cell. The electrode assembly includes a first electrode plate unit and a second electrode plate unit that are wound together. A polarity of the first electrode plate unit is opposite to that of the second electrode plate unit. At least one of the first electrode plate unit or the second electrode plate unit includes an electrode plate, a tab, and a separator. The separator includes a first separator film and a second separator film arranged on two opposite sides of the electrode plate respectively in a thickness direction of the electrode plate. The first separator film includes a first extension portion extending beyond an edge of the electrode plate along a width direction of the electrode plate. The second separator film includes a second extension portion extending beyond the edge of the electrode plate along the width direction of the electrode plate. The tab is disposed on the electrode plate. The tab extends out of the separator from between the first extension portion and the second extension portion. A part of the first extension portion is connected to a part of the second extension portion to form sealing regions. There are at least two sealing regions. The sealing regions avoid the tab. The electrode assembly provided herein can effectively improve anti-drop performance of the battery cell.

FIG. 4

## Description

This application claims priority to Chinese Patent Application No. 202310802063.8, filed with China National Intellectual Property Administration on June 30, 2023 and entitled "ELECTRODE ASSEMBLY AND BATTERY CELL", which is incorporated herein by reference in its entirety.

## TECHNICAL FIELD

This application relates to the field of electrochemical technology, and in particular, to an electrode assembly and a battery cell.

## BACKGROUND

As the Computer, Communication, Consumer Electronics (3C) electronic products are used in more diverse and more complex scenarios, safety requirements imposed by people on the electronic products are increasingly stringent, and attention to battery safety is growing. After a battery is dropped repeatedly, the battery is prone to voltage drop or even fire and explosion. Through research, it is found that a main cause of voltage drop or fire and explosion of a dropped battery is an internal short circuit caused by shrinkage of a separator inside the battery. During repeated drops, free electrolyte solution repeatedly impacts the separator. When an impact force of the electrolyte solution exceeds a binding force of the separator, the separator inside the battery shrinks, and a positive electrode plate directly contacts a negative electrode plate, resulting in an internal short circuit. Consequently, voltage drops significantly, and the battery fails or even directly smokes and catches fire. Therefore, the shrinkage of the separator poses a severe threat to battery safety and urgently needs to be addressed.

## SUMMARY

Some embodiments of this application provide an electrode assembly and a battery cell to solve the problem that the anti-drop performance of the battery cell is poor.

According to a first aspect, this application provides an electrode assembly. The electrode assembly includes a first electrode plate unit and a second electrode plate unit that are wound together. A polarity of the first electrode plate unit is opposite to that of the second electrode plate unit.

At least one of the first electrode plate unit or the second electrode plate unit includes an electrode plate, a tab, and a separator. The separator includes a first separator film and a second separator film arranged on two opposite sides of the electrode plate respectively in a thickness direction of the electrode plate. The first separator film includes a first extension portion extending beyond an edge of the electrode plate along a width direction of the electrode plate. The second separator film includes a second extension portion extending beyond the edge of the electrode plate along the width direction of the electrode plate. The tab is disposed on the electrode plate. The tab extends out of the separator from between the first extension portion and the second extension portion. The first extension portion is connected to the second extension portion to form sealing regions. There are at least two sealing regions. The sealing regions avoid the tab.

In the electrode assembly in an embodiment of this application, the part of the first separator film extending beyond the width of the electrode plate is connected to the part of the second separator film extending beyond the width of the electrode plate in a specified manner, and the connection is solidified to form a sealing region, thereby preventing occurrence of a voltage drop or a short circuit of the battery cell caused by contact between the positive electrode plate and the negative electrode plate. Two adjacent sealing regions are spaced apart, and an electrolyte solution can enter a space between the first separator film and the second separator film from a region at which the first separator film is not connected to the second separator film, so that the electrolyte solution still infiltrates the electrode assembly sufficiently. The sealing regions avoid the tab, thereby preventing excessive pressure on the tab and the electrode plate correspondingly connected to the tab, and effectively improving the stability of the performance of the resulting battery cell.

In some exemplary embodiments, at least a part of the sealing regions are spaced apart along a length direction of the electrode plate. In the length direction of the electrode plate, a length of the electrode plate is L, a length of each sealing region is $l_0$, and a width between two adjacent sealing regions is a1, satisfying:

$$1 < L/l_0 \leq 200;$$

and/or

$$200 \leq L/a1 \leq 4000;$$

and/or

$$1 \leq l_0/a1 \leq 4000.$$

Based on the above embodiment, by controlling the ratios of L and $l_0$ to a1 to fall within appropriate ranges, it is convenient to distribute the length and spacing of the sealing regions in the length direction of the electrode plate, so that the sealing regions are firmly encapsulated in the length direction of the electrode plate and are efficiently infiltrated by the electrolyte solution.

In some exemplary embodiments, a part of the sealing regions are spaced apart along the length direction of the electrode plate, and another part of the sealing regions are spaced apart along a width direction of the electrode plate. In the width direction of the electrode plate, a width of the electrode plate is W, a width of each sealing region is $w_0$, and a width between two adjacent sealing regions is a2, satisfying:

$$1 \leq W/w_0 \leq 20;$$

and/or

$$W/a2 \geq 20;$$

and/or

$$w_0/a2 \geq 1.$$

Based on the above embodiment, by controlling the ratios of W and $w_0$ to a2 to fall within the above ranges, it is convenient to distribute the length and spacing of the sealing regions in the width direction of the electrode plate, so that the sealing regions are firmly encapsulated in the width direction of the electrode plate and are efficiently infiltrated by the electrolyte solution.

In some exemplary embodiments, in the width direction of the electrode plate, the first extension portion includes a first part located on one side of the electrode plate. Apart of the first part is connected to the second extension portion to form at least two sealing regions.

In some exemplary embodiments, in the width direction of the electrode plate, one end of the first separator film facing away from the first part is integrally formed with the second separator film.

Based on the above embodiment, it is convenient to reduce the cutting process of the separator, and the assembling efficiency is improved.

In some exemplary embodiments, in the width direction of the electrode plate, the first extension portion includes a second part facing away from the first part. A part of the second part is connected to the second extension portion to form at least one sealing region.

Based on the above embodiment, on the one hand, it is convenient to improve the firmness of the connection between a plurality of sealing regions and prevent a short circuit between two electrode plates of opposite polarities caused by the wobbling of the electrode plates. On the other hand, in the width direction of the electrode plate, the electrolyte solution is enabled to enter the space between the first separator film and the second separator film from two opposite ends of the separator, thereby improving the infiltration effect of the electrolyte solution.

In some exemplary embodiments, each of the sealing regions is a hot-pressed sealing portion or a calendered sealing portion; or an adhesive layer is disposed between the first extension portion and the second extension portion, and the first extension portion and the second extension portion are connected by the adhesive layer to form the sealing region.

Based on the above embodiments, the hot-pressed sealing portion or the calendered sealing portion may be produced by pressing based on a preset pattern to avoid tabs, and an adhesive is applied onto the surface of at least one of the first extension portion or the second extension portion, and then the two extension portions are bonded to form a sealing region. The processing method is simple, and can prevent excessive pressure on the tab and the electrode plate part corresponding to the tab, thereby improving the performance stability of the resulting electrode assembly.

In some exemplary embodiments, the electrode assembly includes a straight part and a curved part. The sealing region is disposed on the straight part.

Based on the above embodiment, with the sealing region disposed on the straight portion, the sealing region is structurally stable, and the separator can more favorably protect the electrode plate, thereby preventing the occurrence of unstable connection of the sealing regions due to high stress in the curved part.

In some exemplary embodiments, the sealing regions are correspondingly arranged in a thickness direction of the electrode assembly. The first extension portion and the second extension portion of the curved portion are spaced apart.

Based on the above embodiment, the infiltration effect of the electrolyte solution for the electrode assembly is improved. In addition, the above embodiment makes the arrangement of the sealing regions regular, and helps to design a space for mounting other structures of the battery cell, thereby reducing the space occupied by the electrode assembly, and consequently improving the energy density of the battery cell.

In some exemplary embodiments, the electrode assembly includes two electrode plates, at least two tabs, and one separator. At least one tab is disposed on one of the electrode plates. The electrode plate is disposed between the first separator film and the second separator film of the separator to form the first electrode plate unit. A remaining tab is disposed on the other electrode plate to form the second electrode plate unit. The two electrode plates are opposite in polarity.

The electrode assembly includes two electrode plates, at least two tabs, and two separators. At least one tab is disposed on one of the electrode plates, and the electrode plate is disposed between the first separator film and the second separator film of one of the separators to form the first electrode plate unit. A remaining tab is disposed on the other electrode plate, and the electrode plate is disposed between the first separator film and the second separator film of the other separator to form the second electrode plate unit. The two electrode plates are opposite in polarity.

Based on the above embodiments, the separator can provide more comprehensive protection for the electrode plates, and more sufficiently prevent the short circuit between two electrode plates of opposite polarities.

In some exemplary embodiments, the tab extends out of the separator along the width direction of the electrode plate. In the width direction of the electrode plate, a width of one of the electrode plates is less than a width of the other electrode plate. At least the electrode plate with a smaller width is disposed between the first separator film and the second separator film of the separator.

Based on the above embodiment, when the separator extends beyond the edge of the electrode plate with a smaller width, the first extension portion and the second extension portion of the separator can also separate two adjacent parts of the electrode plate with a larger width, thereby saving the amount of separator required, and consequently saving the space occupied by the separator, and increasing the energy density of the battery cell that employs the electrode assembly of this application.

In some exemplary embodiments, the electrode plate with a smaller width is a positive electrode plate, and the electrode plate with a larger width is a negative electrode plate.

In some exemplary embodiments, the sealing regions are spaced apart from the electrode plate. A distance from a sealing region edge facing the electrode plate to an edge of the electrode plate is S, and S satisfies: $0.1 \text{ mm} \leq S \leq 1 \text{ mm}$.

Based on the above embodiment, the sealing regions are spaced apart from the electrode plate to buffer the impact of the electrolyte solution on the separator and prevent tearing of the sealing regions caused by the sealing regions moving until contact with the edge of the electrode plate when the separator is impacted by the electrolyte solution.

In some exemplary embodiments, the tab extends out of the separator along the width direction of the electrode plate. In a length direction of the electrode plate, one of the sealing regions is disposed on one side of the tab, and the other sealing region is disposed on the other side of the tab. A distance from a sealing region edge to an edge of the tab is Q, and Q satisfies: $0.2 \text{ mm} \leq Q \leq 2 \text{ mm}$.

Based on the above embodiment, the sealing region is adjacent to the tab, thereby improving the packaging stability of the sealing regions at the tab. In addition, the two sealing regions are disposed on two opposite sides of the tab, so that the separator can act on the tab, thereby improving the stability of the tab mounted on the electrode plate.

According to a second aspect, this application provides a battery cell. The battery cell includes a packaging bag and the electrode assembly described above. The electrode assembly is disposed in the packaging bag.

The electrode assembly and the battery cell according to embodiments of this application achieve at least the following beneficial effects:

With a plurality of sealing regions formed in the part of the separator extending beyond the bonding region, the short circuit of the battery caused by contact between the positive electrode plate and the negative electrode plate is prevented, where the contact is caused by inward shrinkage of the separator, folding of the separator, or wobbling of the electrode plate during a drop of the battery cell. This improves the safety performance and cycle performance of the battery cell. The part of the first separator film extending beyond the width of the electrode plate is connected to the part of the second separator film extending beyond the width of the electrode plate in a specified manner, and the connection is solidified to form a sealing region. In this way, the electrode plate is constrained between the first separator film and the second separator film, thereby preventing contact between the positive electrode plate and the negative electrode plate due to shrinkage of the separator, and reducing occurrence of a voltage drop, failure, and short circuit of the battery cell. The two adjacent sealing regions are spaced apart, and the first separator film is not connected to the second separator film in a partial region extending beyond the width of the electrode plate. The electrolyte solution can enter the space between the first separator film and the second separator film from the region at which the first separator film is not connected to the second separator film, so that the electrolyte solution can still infiltrate the electrode assembly sufficiently. In a process of forming the sealing regions by processing the first extension portion and the second extension portion, the sealing regions are disposed in such a way as to avoid the tab, thereby preventing excessive pressure on the tab and the electrode plate in a region corresponding to the tab, and effectively improving the stability of the performance of the resulting battery cell.

**BRIEF DESCRIPTION OF DRAWINGS**

To describe the technical solutions in some embodiments of this application more clearly, the following outlines the drawings to be used in the description of the embodiments. Evidently, the drawings outlined below merely illustrate some embodiments of this application, and a person skilled in the art may derive other drawings based on the listed drawings.

FIG. 1 is a structural perspective schematic diagram of an electrode assembly according to an embodiment of this application;

FIG. 2 is a structural perspective schematic diagram of a first electrode plate unit unwound according to an embodiment of this application;

FIG. 3 is a cross-sectional view of sectioning along a B-B line shown in FIG. 1;

FIG. 4 is a structural schematic front view of a first electrode plate unit unwound according to an embodiment of this application;

FIG. 5 is a close-up view of a part M shown in FIG. 4;
FIG. 6 is a structural schematic side view of a tail portion of a jelly-roll electrode assembly according to an embodiment of this application; and
FIG. 7 is a close-up view of a part N shown in FIG. 6.

List of reference signs:

10. electrode assembly; 11. first electrode plate unit;
12. second electrode plate unit; 101. sealing region;
100. electrode plate; 110. positive electrode plate;
120. negative electrode plate;
200. separator; 210. first separator film; 201. first extension portion; 211. first part; 212. second part; 213. third part; 214. fourth part; 220. second separator film; 202. second extension portion;
400. tab; 410. protection layer;
310. straight part; 320. curved part;
X. length direction; Y. width direction; Z. thickness direction.

## DETAILED DESCRIPTION

To make the objectives, technical solutions, and advantages of this application clearer, the following describes this application in more detail with reference to embodiments. Understandably, the specific embodiments described herein are merely intended to explain this application, but are not intended to limit this application.

The applicant has found that in the related art, it is difficult to effectively solve the problem of separator shrinkage by adopting an adhesive wrapping scheme and a low-electrolyte retention design scheme. The adhesive wrapping scheme is to dispose U-shaped adhesive tape at a head part and a tail part separately in a width direction of an electrode plate. The U-shaped adhesive tape is bonded to a separator on one side of the electrode plate, and then routed to the other side of the electrode plate (for example, the U-shaped adhesive tape is bonded to a separator in an OH region of an electrode assembly) to bond to the separator on the other side. The position of the separator is fixed by the U-shaped adhesive tape. The low-electrolyte retention design is to reduce the content of free electrolyte solution in a battery cell and reduce the impact of the free electrolyte solution on the separator in the OH region of the electrode assembly. However, in the case of repeated drops, the electrolyte solution is still prone to impact the separator, causing the separator to deform or shrink.

The applicant also finds that, by providing a closed accommodation region on the separator and disposing the electrode plate within the accommodation region, the separator shrinkage caused by electrolyte impact can be effectively reduced, but the separator forms a fully closed structure that is adverse to infiltration by the electrolyte solution, thereby affecting the production efficiency of the battery cell. Further, during manufacture of an electrode assembly, if the separator is closed by calendering, due to existence of a tab that makes the thickness at the tab greater than the thickness at other positions, a composite roller and auxiliary roller will excessively press a position at which the tab is connected, making the processing inconvenient and affecting the quality of the resulting electrode assembly. In view of this, an embodiment of this application provides an electrode assembly and a battery cell.

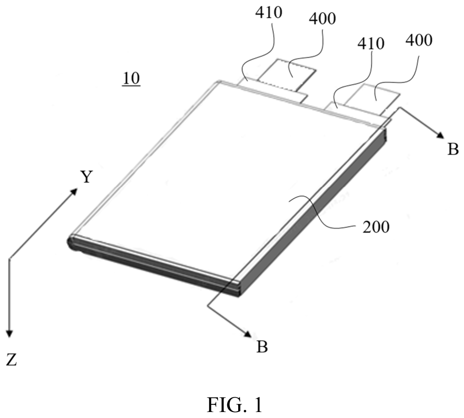

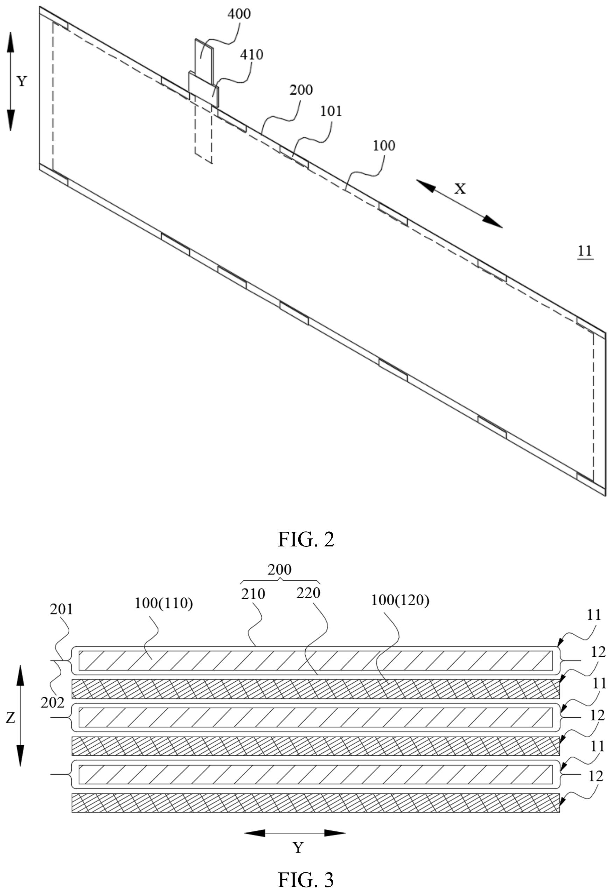

As shown in FIG. 1, which is a structural schematic diagram of an electrode assembly 10 according to an embodiment of this application. The electrode assembly 10 includes a first electrode plate unit and a second electrode plate unit that are wound together. A polarity of the first electrode plate unit is opposite to that of the second electrode plate unit. As shown in FIG. 2, which is a structural perspective schematic diagram of a first electrode plate unit 11 or a second electrode plate unit 12 in an unwound state according to an embodiment of this application, Both the first electrode plate unit 11 and the second electrode plate unit 12 assume a length direction X. The first electrode plate unit 11 and the second electrode plate unit 12 are stacked, with the length directions X of the two electrode plate units being the same. The first electrode plate unit 11 and the second electrode plate unit 12 are wound along the length direction X of the two electrode plate units to obtain a jelly-roll electrode assembly 10. FIG. 3 is a cross-sectional view of the jelly-roll electrode assembly 10. As can be seen from FIG. 3, the first electrode plate units 11 and the second electrode plate units 12 are alternately arranged.

The first electrode unit 11 and the second electrode unit 12 each include an electrode plate 100 and a tab 400. The tab 400 is disposed on the electrode plate 100 and is configured to be electrically connected to an external circuit. The polarity of the first electrode plate unit 11 is opposite to that of the second electrode plate unit 12. To be specific, among the electrode plate 100 of the first electrode plate unit 11 and the electrode plate 100 of the second electrode plate unit 12, one is a negative electrode plate 120, and the other is a positive electrode plate 110. The tab 400 disposed on the positive electrode plate 110 is a positive tab 400, and the tab 400 disposed on the negative electrode plate 120 is a negative tab 400. For example, when the electrode plate 100 of the first electrode plate unit 11 is a positive electrode plate 110, the electrode plate 100 of the second electrode plate unit 12 is a negative electrode plate 120; when the electrode plate 100 of the first electrode plate unit 11 is a negative electrode plate 120, the electrode plate 100 of the second electrode plate unit 12 is a positive electrode plate 110.

At least one of the first electrode plate unit 11 or the second electrode plate unit 12 further includes a separator 200. The separator 200 is electrically insulating. At least a part of the separator 200 is disposed between the electrode plate 100 of the first electrode plate unit 11 and the electrode plate 100 of the second electrode plate unit 12 to prevent a short circuit between the two electrode plates 100 of opposite polarities. The material of the separator 200 may include at least one of polyethylene or polypropylene. The material of the separator 200 is not limited herein, and any conventional material used in the art for preparing the separator 200 is applicable to this application.

The separator 200 includes a first separator film 210 and a second separator film 220 arranged on two opposite sides of the electrode plate 100 respectively in the thickness direction Z of the electrode plate 100. The first separator film 210 includes a first extension portion 201 extending beyond the edge of the electrode plate 100 along the width direction Y of the electrode plate 100. The second separator film 220 includes a second extension portion 202 extending beyond the edge of the electrode plate 100 along the width direction Y of the electrode plate 100. The tab 400 is disposed on the electrode plate 100. The tab 400 extends out of the separator 200 from between the first extension portion 201 and the second extension portion 202. The first extension portion 201 is connected to the second extension portion 202 to form sealing regions 101. There are at least two sealing regions 101, and the sealing regions 101 avoid the tab 400.

In this embodiment of this application, with a plurality of sealing regions 101 formed in the part of the separator 200 extending beyond the bonding region, the short circuit of the battery caused by contact between the positive electrode plate 110 and the negative electrode plate 120 is prevented, where the contact is caused by inward shrinkage of the separator 200, folding of the separator 200, or wobbling of the electrode plate 100 during a drop of the battery cell. This improves the safety performance and cycle performance of the battery cell. The part of the first separator film 210 extending beyond the width of the electrode plate 100 is connected to the part of the second separator film 220 extending beyond the width of the electrode plate in a specified manner, and the connection is solidified to form a sealing region 101. In this way, the electrode plate 100 is constrained between the first separator film 210 and the second separator film 220, thereby preventing occurrence of a voltage drop, failure, and short circuit of the battery cell caused by contact between the positive electrode plate 110 and the negative electrode plate 120. The two adjacent sealing regions 101 are spaced apart, and the first separator film 210 is not connected to the second separator film 220 in a partial region extending beyond the width of the electrode plate 100. The electrolyte solution can enter the space between the first separator film 210 and the second separator film 220 from the region at which the first separator film 210 is not connected to the second separator film 220, so that the electrolyte solution can still infiltrate the electrode assembly 10 sufficiently. In a process of forming the sealing regions 101 by processing the first extension portion 201 and the second extension portion 202, the sealing regions 101 are disposed in such a way as to avoid the tab 400, thereby preventing excessive pressure on the tab 400 and the electrode plate 100 correspondingly connected to the tab 400, and effectively improving the stability of the performance of the resulting battery cell.

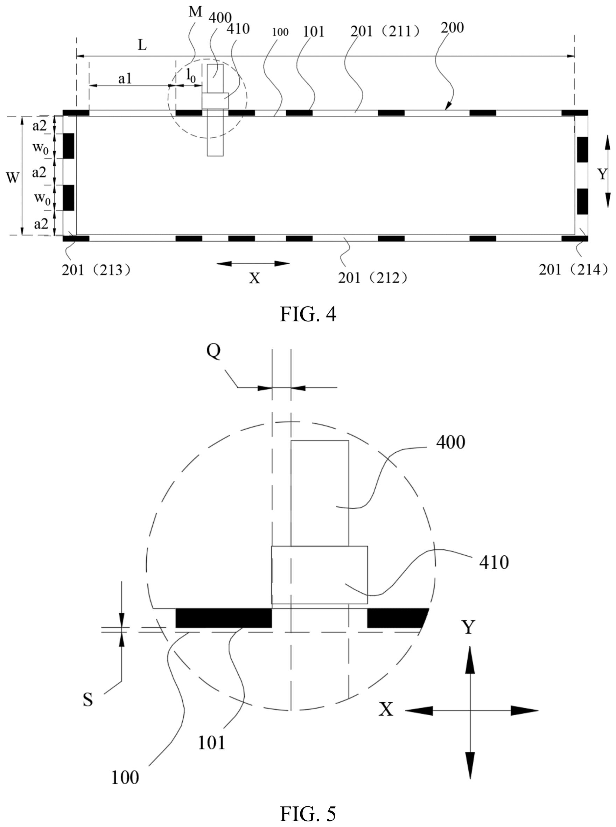

Optionally, the sealing regions 101 are spaced apart from the electrode plate 100 to buffer the impact of the electrolyte solution on the separator 200 and prevent tearing of the sealing regions 101 caused by the sealing regions 101 moving until contact with the edge of the electrode plate 100 when the separator 200 is impacted by the electrolyte solution. Referring to FIG. 4 and FIG. 5, a distance from the sealing region 101 edge facing the electrode plate 100 to the edge of the electrode plate 100 is S, and S satisfies: $0.1 \text{ mm} \leq S \leq 1 \text{ mm}$. S may be 0.1 mm, 0.5 mm, 0.6 mm, 0.7 mm, 0.8 mm, 0.9 mm, or a value falling within a range formed by any two thereof. For example, $0.1 \text{ mm} \leq S \leq 0.5 \text{ mm}$, $0.1 \text{ mm} \leq S \leq 0.6 \text{ mm}$, $0.1 \text{ mm} \leq S \leq 0.7 \text{ mm}$, $0.1 \text{ mm} \leq S \leq 0.8 \text{ mm}$, or $0.1 \text{ mm} \leq S \leq 0.9 \text{ mm}$.

At least a part of the sealing regions 101 are spaced apart along the length direction X of the electrode plate 100. For example, at least two sealing regions 101 are spaced apart along the length direction X of the electrode plate 100. The tab 400 extends out of the separator 200 from between the first extension portion 201 and the second extension portion 202 along the width direction Y of the electrode plate 100. In the length direction X of the electrode plate 100, one of the sealing regions 101 is disposed on one side of the tab 400 and is adjacent to the tab 400, and another sealing region 101 is disposed on the other side of the tab 400 and is adjacent to the tab 400. A distance from the edge of the sealing region 101 adjacent to the tab 400 to the edge of the tab 400 is Q, and Q satisfies: $0.2 \text{ mm} \leq Q \leq 2 \text{ mm}$. Q may be 0.3 mm, 0.6 mm, 0.9 mm, 1.1 mm, 1.5 mm, 1.8 mm, or a value falling within a range formed by any two thereof. For example, $0.2 \text{ mm} \leq Q \leq 0.3 \text{ mm}$, $0.2 \text{ mm} \leq Q \leq 0.6 \text{ mm}$, $0.2 \text{ mm} \leq Q \leq 0.9 \text{ mm}$, $0.2 \text{ mm} \leq Q \leq 1.1 \text{ mm}$, $0.2 \text{ mm} \leq Q \leq 1.5 \text{ mm}$, or $0.2 \text{ mm} \leq Q \leq 1.8 \text{ mm}$. In addition, when Q satisfies $0.2 \text{ mm} \leq Q \leq 2 \text{ mm}$, the separator 200 can also act on the surface of the tab 400 to improve the stability of the tab 400 mounted on the electrode plate 100.

In the length direction X of the electrode plate 100, the length of the electrode plate 100 is L, and the length of the sealing region 101 is $l_0$. L and $l_0$ satisfy: $1 < L/l_0 \leq 200$. $L/l_0$ may be 1, 20, 30, 50, 60, 100, 130, 150, 200, or value falling within a range formed by any two thereof. For example, $1 < L/l_0 \leq 20$, $1 < L/l_0 \leq 30$, $1 < L/l_0 \leq 50$, $1 < L/l_0 \leq 60$, $1 < L/l_0 \leq 100$, $1 < L/l_0 \leq 130$, or $1 < L/l_0 \leq 150$. With the value falling within the above ranges, the length of the sealing region 101 is appropriate, and the sealing region 101 is structurally strong and can effectively resist the impact of the electrolyte solution.

In the length direction X of the electrode plate 100, the width between two adjacent sealing regions 101 is a1, and L/a1 satisfies: $200 \leq L/a1 \leq 4000$. L/a1 may be 200, 300, 500, 800, 1000, 2000, 4000, or a value falling within a range formed by any two thereof. For example,

$200 \leq L/a1 \leq 300$, $200 \leq L/a1 \leq 500$, $200 \leq L/a1 \leq 800$, $200 \leq L/a1 \leq 1000$, $300 \leq L/a1 \leq 500$, which fall within the above spacing range. The spacing between two adjacent sealing regions 101 in the length direction X of the electrode plate 100 is appropriate, thereby facilitating infiltration by the electrolyte solution.

The following relationship is also satisfied: $1 \leq l_0/a1 \leq 4000$. $l_0/a1$ may be 10, 100, 500, 800, 1000, 2000, 4000, or a value falling within a range formed by any two thereof. For example, $1 \leq l_0/a1 \leq 10$, $1 \leq l_0/a1 \leq 100$, $1 \leq l_0/a1 \leq 500$, $1 \leq l_0/a1 \leq 800$, $1 \leq l_0/a1 \leq 1000$, $1 \leq l_0/a1 \leq 2000$, or $10 \leq l_0/a1 \leq 4000$. By controlling the ratio of $l_0$ to a1 to fall within the appropriate range, it is convenient to distribute the length and spacing of the sealing regions 101 in the length direction X of the electrode plate 100, so that the sealing regions 101 are firmly encapsulated in the length direction X of the electrode plate 100 and are efficiently infiltrated by the electrolyte solution.

Further, in the length direction X of the electrode plate 100, the lengths $l_0$ of a plurality of sealing regions 101 (first sealing regions 1011) may be the same or different, and the widths a1 between any two adjacent sealing regions 101 (first sealing regions 1011) may be the same or different.

Understandably, a dimension of the electrode plate 100 in the length direction X is larger than a dimension of the electrode plate 100 in the width direction Y. Correspondingly, a dimension of the separator 200 in the length direction X of the electrode plate 100 is larger than a dimension of the separator 200 in the width direction Y of the electrode plate 100. In addition, in an electrode assembly 10 in a wound state, the electrode 100 and the separator 200 can interact with each other. In the length direction (winding direction) of the electrode plate 100, the electrode plate 100 can provide support for the separator 200, thereby reducing the shrinkage of the separator 200. Therefore, when being impacted, the shrinkage or folding of the separator 200 in the width direction Y of the electrode plate 100 is more prone to cause a short circuit between the two electrode plates 100 of opposite polarities. In this embodiment of this application, the separator 200 includes sealing regions 101 in the part extending out of the electrode plate 100 in the width direction Y of the electrode plate 100, thereby solving the problem that the shrinkage in the width direction Y of the electrode plate 100 causes a short circuit between the two electrode plates 100 of opposite polarities.

When the first extension portion 201 and the second extension portion 202 are spaced apart at two ends of the electrode plate 100 in the length direction X, optionally, as shown in FIG. 4, the width by which the first extension portion 201 and the second extension portion 202 extend out of the electrode plate 100 in the length direction X of the electrode plate 100 is set to be greater than the width by which the first extension portion 201 and the second extension portion 202 extend out of the electrode plate 100 in the width direction Y of the electrode plate 100. By increasing the width by which the first extension portion 201 and the second extension portion 202 extend out of the electrode plate 100 in the length direction X of the electrode plate 100, the short circuit between the two electrode plates 100 of opposite polarities caused by the shrinkage of the separator 200 in the length direction X of the electrode plate 100 is prevented.

Definitely, when the separator 200 is not fixed at the two ends in the length direction X of the electrode plate 100, the short circuit between the two electrode plates 100 of opposite polarities may still occur due to shrinkage of the separator 200 at the two ends along the length direction X of the electrode plate 100. Optionally, a part of the sealing regions 101 (first sealing regions) are spaced apart along the length direction X of the electrode plate 100, and another part of the sealing regions 101 (second sealing regions) are spaced apart along the width direction Y of the electrode plate 100. In other words, the parts of the separator 200 extending out of the electrode plate 100 in both the width direction Y of the electrode plate 100 and the length direction X of the electrode plate 100 are provided with sealing regions 101, thereby effectively preventing the short circuit between the two electrode plates 100 of opposite polarities caused by the shrinkage of the separator 200 in the length direction X of the electrode plate 100 and the width direction Y of the electrode plate 100.

In the width direction Y of the electrode plate 100, the width of the electrode plate 100 is W, the width of the sealing region 101 is $w_0$, and W and $w_0$ satisfy: $1 \leq W/w_0 \leq 20$. $W/w_0$ may be 1, 4, 8, 10, 15, 18, 20, or a value falling within a range formed by any two thereof. For example, $1 \leq W/w_0 \leq 4$, $1 \leq W/w_0 \leq 8$, $1 \leq W/w_0 \leq 15$, or $4 \leq W/w_0 \leq 20$.

In the width direction Y of the electrode plate 100, the width between two adjacent sealing regions 101 is a2, and W and a2 satisfy: $20 \leq W/a2$. $W/a2$ may be 20, 25, 50, 80, 100, 200, 400, or a value falling within a range formed by any two thereof. For example, $25 \leq W/a2$, $50 \leq W/a2$, $80 \leq W/a2$, $100 \leq W/a2$, $200 \leq W/a2$, or $400 \leq W/a2$.

$w_0$ and a2 satisfy: $1 \leq w_0/a2$. $w_0/a2$ may be 20, 25, 50, 80, 100, 200, 400, or a value falling within a range formed by any two thereof. For example, $20 \leq w_0/a2$, $25 \leq w_0/a2$, $50 \leq w_0/a2$, $80 \leq w_0/a2$, $100 \leq w_0/a2$, or $200 \leq w_0/a2$. Similarly, by controlling the ratios of W and $w_0$ to a2 to fall within the above ranges, it is convenient to distribute the length and spacing of the sealing regions 101 in the width direction Y of the electrode plate 100, so that the sealing regions 101 are firmly encapsulated in the width direction Y of the electrode plate 100 and are efficiently infiltrated by the electrolyte solution.

Further, in the width direction Y of the electrode plate 100, the widths $w_0$ of a plurality of sealing regions 101 (second sealing regions) may be the same or different, and the widths a2 between any two adjacent sealing regions 101 (second sealing regions) may be the same or different.

Optionally, the first separator film 210 and the second separator film 220 are integrally formed. Specifically, in the width direction Y of the electrode plate 100, the first extension portion 201 includes a first part 211 located on one side of the electrode plate 100. A part of the first part 211 is connected to the second extension portion 202 to form at least two sealing regions 101. One end of the first separator film 210 facing away from the first part 211 is integrally formed with the second separator film 220, thereby forming a fully encapsulated structure directly on one side of the electrode plate 100. For example, a separator film substrate may be applied from one side of the electrode plate 100 through one of the long sides of the electrode plate 100 to the other side of the electrode plate 100. In this way, in the thickness direction Z of the electrode plate 100, the part of the separator film substrate, which is located on one side of the electrode plate 100, forms a first separator film 210, and the part located on the other side of the electrode plate 100 forms a second separator film 220. In this way, it is convenient to reduce the cutting process of the separator 200, and the assembling efficiency is improved.

Optionally, the first separator film 210 and the second separator film 220 are disposed separately. Specifically, the first extension portion 201 includes a first part 211, a second part 212, a third part 213, and a fourth part 214. In the width direction Y of the electrode plate 100, the first part 211 is located on one side of the electrode plate 100, and the second part 212 is located on the other side of the electrode plate 100. In the length direction X of the electrode plate 100, the third part 213 is located on one side of the electrode plate 100, and the fourth part 214 is located on the other side of the electrode plate 100. A part of the first part 211 is connected to the second extension portion 202 to form at least two sealing regions 101. A part of the second part 212 is connected to the second extension portion 202 to form at least one sealing region 101. A part of the third part 213 is connected to the second extension portion 202 to form at least one sealing region 101. A part of the fourth part 214 is connected to the second extension portion 202 to form at least one sealing region 101. This improves the infiltration effect of the electrolyte solution.

Optionally, the first extension portion 201 and the second extension portion 202 are pressed together to form the sealing region 101. For example, each sealing region 101 is a hot-pressed sealing portion or a calendered sealing portion. When the sealing region 101 is formed by pressing together, the sealing region 101 may be formed based on a preset pressing pattern to avoid the tab 400, thereby preventing excessive pressure on the tab 400 and the electrode plate 100 part corresponding to the tab 400, and improving the performance stability of the resulting electrode assembly 10.

Optionally, the first extension portion 201 and the second extension portion 202 are bonded to form the sealing region 101. For example, an adhesive layer is disposed between the first extension portion 201 and the second extension portion 202, and the first extension portion 201 is connected to the second extension portion 202 by the adhesive layer to form the sealing region 101. The sealing region 101 may be formed by applying an adhesive to the surface of at least one of the first extension portion 201 or the second extension portion 202 and then bonding the two extension portions together, with the adhesive avoiding the tab 400.

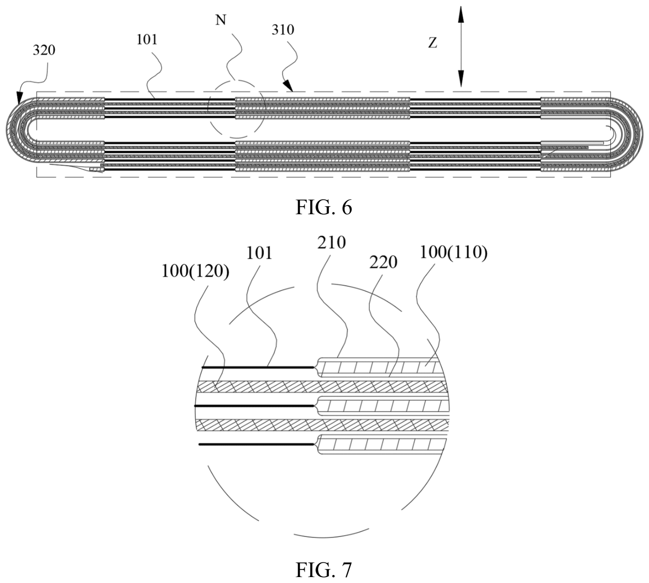

As shown in FIG. 6, the electrode assembly 10 in a wound state includes a straight part 310 and a curved part 320. The stress of the curved part 320 is relatively large. Due to the existence of stress, the first extension portion 201 and the second extension portion 202 that form the sealing region 101 in the curved part 320 are more prone to be loosely connected. When the stress is large, wrinkles are prone to occur to interfere with the separator 200 in other regions.

Optionally, both the curved part 320 and the straight part 310 are set to include a sealing region 101, and the length of the sealing region 101 of the curved part 320 is less than the length of the sealing region 101 of the straight part 310, so as to reduce the impact of the stress of the curved part 320 on the structural stability of the sealing region 101.

Preferably, the straight part 310 is set to include a sealing region 101, and the first extension portion 201 and the second extension portion 202 of the curved part 320 are spaced apart. The surface of the straight part 310 described in this embodiment of this application may be a flat face (that is, the straight part 310 assumes a flat plate shape), or the straight part 310 may be slightly curved, but the curvature of the straight part 310 is less than the curvature of the curved part 320, and the curvature of the straight part 310 is significantly different from the curvature of the curved part 320.

Referring to FIG. 6 and FIG. 7, when the straight part 310 includes a sealing region 101, the sealing regions 101 of the straight part 310 are correspondingly disposed in the thickness direction of the electrode assembly 10, and the first extension portion 201 and the second extension portion 202 of the curved part 320 are spaced apart. This improves the infiltration efficiency of the electrolyte solution. The width direction of the electrode assembly 10 is the same as the width direction Y of the electrode plate 100, and the thickness direction of the electrode assembly 10 is the thickness direction Y of the electrode plate 100 in the straight part 310.

Definitely, in some other embodiments, the sealing regions 101 in the straight part 310 may be staggered or partially overlapped instead in the thickness direction Z of the electrode assembly 10.

In the electrode assembly 10 in a wound state, two electrode plates 100 of opposite polarities are alternately arranged in the thickness direction Z of the electrode assembly 10. A part of the separator 200 is required between any two electrode plates 100 of opposite polarities to separate the two electrode plates 100 of opposite polarities to prevent a short circuit. Optionally, still referring to FIG. 3, one of the electrode plates 100 is configured to be constrained between the first separator film 210 and the second separator film 220 of the same separator 200. Specifically, the electrode assembly 10 includes two electrode plates 100, at least two tabs 400, and one separator 200. At least one tab 400 is disposed on one of the electrode plates 100. The electrode plate 100 is disposed between the first separator film 210 and the second separator film 220 of the separator 200 to form the first electrode plate unit 11. The remaining tab 400 is disposed on the other electrode plate 100 to form the second electrode plate unit 12. The two electrode plates 100 are opposite in polarity. In this way, in the electrode assembly 10 in a wound state, two electrode plates 100 of opposite polarities can be separated in every part in the thickness direction Z of the electrode assembly 10.

Optionally, one electrode plate 100 of the electrode assembly 10 is configured to be constrained between the first separator film 210 and the second separator film 220 of one of the separators 200, and the other electrode plate 100 is configured to be constrained between the first separator film 210 and the second separator film 220 of the other separator 200. Specifically, the electrode assembly 10 includes two electrode plates 100, at least two tabs 400, and two separators 200. At least one tab 400 is disposed on one of the electrode plates 100, and the electrode plate 100 is disposed between the first separator film 210 and the second separator film 220 of one of the separators 200 to form the first electrode plate unit 11. The remaining tab 400 is disposed on the other electrode plate 100, and the electrode plate 100 is disposed between the first separator film 210 and the second separator film 220 of the other separator 200 to form the second electrode plate unit 12. The two electrode plates 100 are opposite in polarity. In this way, the separator 200 can provide more comprehensive protection for the electrode plates 100, and more sufficiently prevent the short circuit between two electrode plates 100 of opposite polarities.

The tab 400 extends out of the separator 200 along the width direction Y of the electrode plate 100. In the width direction Y of the electrode plate 100, the width of one electrode plate 100 is less than the width of the other electrode plate 100. At least the electrode plate 100 with a smaller width is disposed between the first separator film 210 and the second separator film 220 of the separator 200. In this way, when the separator 200 extends beyond the edge of the electrode plate 100 with a smaller width, the first extension portion 201 and the second extension portion 202 of the separator 200 can also separate two adjacent parts of the electrode plate 100 with a larger width, thereby saving the amount of separator 200 required, and consequently saving the space occupied by the separator 200, and increasing the energy density of the battery cell that employs the electrode assembly 10 of this application.

Optionally, the electrode plate 100 with a smaller width is a positive electrode plate 110, and the electrode plate 100 with a larger width is a negative electrode plate 120.

The electrode assembly 10 further includes a protection layer 410 disposed on the surface of the tab 400, and the protection layer 410 avoids a junction between the tab 400 and the electrode plate 100. The protection layer 410 is configured to prevent the tab 400 from contacting other structures, for example, prevent the tab 400 from contacting sharp structures such as burrs generated during the processing of other structures. The protection layer 410 is disposed on the surface of the tab 400 extending out of the separator 200. Further, the protection layer 410 also extends to the space between the separator 200 and the tab 400, thereby buffering the stress of the tab 400 mounted on the electrode plate 100. For example, the protection layer 410 is a tab adhesive. The protection layer 410 can also be configured to be connected to other structures of the battery cell to fix the position of the tab 400. For example, the protection layer 410 is connected to an outer package (packaging bag) of the battery cell.

An embodiment of this application further provides a battery cell. The battery cell includes an outer package and the electrode assembly 10 described above. The electrode assembly 10 is disposed in an inner space of the outer package. The tab 400 extends out of the outer package from the electrode plate 100, and is configured to be electrically connected to an external circuit, and the tab 400 is fixed to the outer package.

In an embodiment of this application, the battery cell includes a pouch cell and a hard-shell cell. The outer package of the pouch cell may be an aluminum laminated film. The tab 400 is connected to the aluminum laminated film when extending out of the outer package. Further, a protection layer 410 disposed on the surface of the tab 400 is connected to the aluminum laminated film. For example, the material of the protection layer 410 includes polypropylene (PP) or polyethylene (PE). The outer package of the hard-shell cell may be an aluminum shell. The hard-shell cell further includes an electrode post disposed on the outer package. The tab 400 may extend from the electrode plate 100 until the tab is connected to the electrode post, and then may be connected to an external circuit by the electrode post. Alternatively, the tab 400 may extend from the electrode plate 100 until the tab is connected to the shell, and then is electrically connected to an external circuit.

The numerical values and value ranges mentioned herein are approximate values. Limited by the manufacturing process, an error within a specified range may occur. A person skilled in the art may consider such error to be negligible.

In the description of this application, a list of items referred to by the terms such as "at least one of", "at least one thereof" and other similar terms may mean any combination of the listed items. For example, if items A and B are listed, the phrases "at least one of A and B" and "at least one of A or B" mean: A alone; B alone; or both A and B. In another example, if items A, B, and C are listed, the phrases "at least one of A, B, and C" and "at least one of A, B, or C" mean: A alone; B alone; C alone; A and B (excluding C); A and C (excluding B); B and C (excluding A); or all of A, B, and C.

Described above are merely preferred embodiments of this application that are not intended to limit this application. Any modifications, equivalent substitutions, and improvements made without departing from the concept and principles of this application still fall within the protection scope of this application.

**Claims**

1. An electrode assembly, **characterized in that** the electrode assembly comprises a first electrode plate unit and a second electrode plate unit that are wound together; and a polarity of the first electrode plate unit is opposite to that of the second electrode plate unit; at least one of the first electrode plate unit or the second electrode plate unit comprises an electrode plate, a tab, and a separator; the separator comprises a first separator film and a second separator film arranged on two opposite sides of the electrode plate in a thickness direction of the electrode plate respectively; the first separator film comprises a first extension portion extending beyond an edge of the electrode plate along a width direction of the electrode plate; the second separator film comprises a second extension portion extending beyond the edge of the electrode plate along the width direction of the electrode plate; the tab is disposed on the electrode plate; the tab extends out of the separator from between the first extension portion and the second extension portion; the first extension portion is connected to the second extension portion to form sealing regions; there are at least two sealing regions; and the sealing regions avoid the tab.

2. The electrode assembly according to claim 1, **characterized in that** at least a part of the sealing regions are spaced apart along a length direction of the electrode plate; in the length direction of the electrode plate, a length of the electrode plate is L, a length of each sealing region is $l_0$, and a distance between two adjacent sealing regions is a1, satisfying:

$$1 < L/l_0 \leq 200;$$

and/or

$$200 \leq L/a1 \leq 4000;$$

and/or

$$1 \leq l_0/a1 \leq 4000.$$

3. The electrode assembly according to claim 2, **characterized in that** a part of the sealing regions are spaced apart along the length direction of the electrode plate, and another part of the sealing regions are spaced apart along a width direction of the electrode plate; in the width direction of the electrode plate, a width of the electrode plate is W, a width of each sealing region is $w_0$, and a width between two adjacent sealing regions is a2, satisfying:

$$1 \leq W/w_0 \leq 20;$$

and/or

$$W/a2 \geq 20;$$

and/or

$$w_0/a2 \geq 1.$$

4. The electrode assembly according to claim 1, **characterized in that** in the width direction of the electrode plate, the first extension portion comprises a first part located on one side of the electrode plate, and a part of the first part is connected to the second extension portion to form at least two sealing regions;

in the width direction of the electrode plate, one end of the first separator film facing away from the first part is integrally formed with the second separator film; or in the width direction of the electrode plate, the first extension portion comprises a second part facing away from the first part, and a part of the second part is connected to the second extension portion to form at least one sealing region.

5. The electrode assembly according to claim 1, **characterized in that**

each of the sealing regions is a hot-pressed sealing portion or a calendered sealing portion; or an adhesive layer is disposed between the first extension portion and the second extension portion, and the first extension portion and the second extension portion are connected by the adhesive layer to form the sealing region.

6. The electrode assembly according to claim 1, **characterized in that** the electrode assembly comprises a straight part and a curved part, and the sealing region is disposed on the straight part.

**7.** The electrode assembly according to claim 6, **characterized in that** the sealing regions are correspondingly arranged in a thickness direction of the electrode assembly, and the first extension portion and the second extension portion of the curved portion are spaced apart.

**8.** The electrode assembly according to claim 1, **characterized in that**

the electrode assembly comprises two electrode plates, at least two tabs, and one separator; at least one tab is disposed on one of the electrode plates, and the electrode plate is disposed between the first separator film and the second separator film of the separator to form the first electrode plate unit; a remaining tab is disposed on the other electrode plate to form the second electrode plate unit; and the two electrode plates are opposite in polarity; or
the electrode assembly comprises two electrode plates, at least two tabs, and two separators; at least one tab is disposed on one of the electrode plates, and the electrode plate is disposed between the first separator film and the second separator film of one of the separators to form the first electrode plate unit; a remaining tab is disposed on the other electrode plate and the electrode plate is disposed between the first separator film and the second separator film of the other separator to form the second electrode plate unit; and the two electrode plates are opposite in polarity.

**9.** The electrode assembly according to claim 8, **characterized in that** the tab extends out of the separator along the width direction of the electrode plate; and, in the width direction of the electrode plate, a width of one of the electrode plates is less than a width of the other electrode plate, and at least the electrode plate with a smaller width is disposed between the first separator film and the second separator film of the separator.

**10.** The electrode assembly according to claim 9, **characterized in that** the electrode plate with a smaller width is a positive electrode plate, and the electrode plate with a larger width is a negative electrode plate.

**11.** The electrode assembly according to claim 1, **characterized in that**

the sealing regions are spaced apart from the electrode plate, a distance from a sealing region edge facing the electrode plate to an edge of the electrode plate is S, and S satisfies: $0.1\,mm \le S \le 1\,mm$; and/or
the tab extends out of the separator along the width direction of the electrode plate; in a length direction of the electrode plate, one of the sealing regions is disposed on one side of the tab, and the other sealing region is disposed on the other side of the tab, and a distance from a sealing region edge to an edge of the tab is Q, and Q satisfies: $0.2\,mm \le Q \le 2\,mm$.

**12.** A battery cell, **characterized in that** the battery cell comprises:

a packaging bag; and
the electrode assembly according to any one of claims 1 to 11, wherein the electrode assembly is disposed in the packaging bag.

FIG. 1

FIG. 2

FIG. 3

FIG. 4

FIG. 5

FIG. 6

FIG. 7

# EP 4 738 494 A1

## INTERNATIONAL SEARCH REPORT

| | International application No. |
|---|---|
| | **PCT/CN2024/097916** |

### A. CLASSIFICATION OF SUBJECT MATTER

H01M10/04(2006.01)i; H01M50/105(2021.01)i

According to International Patent Classification (IPC) or to both national classification and IPC

### B. FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 电芯, 隔膜, 极耳, 连接, 结合, 粘, core?, cell?, batter +, separat+, pole, tab?, connect+, adhes+, glu+, bind+

### C. DOCUMENTS CONSIDERED TO BE RELEVANT

| Category* | Citation of document, with indication, where appropriate, of the relevant passages | Relevant to claim No. |
|---|---|---|
| PX | CN 116722198 A (AMPEREX TECHNOLOGY LTD.) 08 September 2023 (2023-09-08) claims 1-12 | 1-12 |
| X | CN 104112835 A (MITSUBISHI MOTORS CORP.) 22 October 2014 (2014-10-22) description, paragraphs 53-79, and figures 1-11 | 1-12 |
| X | CN 217768461 U (CONTEMPORARY AMPEREX TECHNOLOGY CO., LTD.) 08 November 2022 (2022-11-08) description, paragraphs 55-155, and figures 1-15 | 1-12 |
| X | CN 107204415 A (ETRUST (JIANGSU) POWER TECHNOLOGY CO., LTD.) 26 September 2017 (2017-09-26) description, paragraphs 27-34, and figures 1-11 | 1-12 |
| X | CN 114937818 A (JIANGSU ZENERGY BATTERY TECHNOLOGIES CO., LTD.) 23 August 2022 (2022-08-23) description, paragraphs 41-70, and figures 1-8 | 1-12 |
| A | JP 2016219382 A (TOSHIBA CORP.) 22 December 2016 (2016-12-22) entire document | 1-12 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 August 2024** | **21 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
**Information on patent family members**

International application No.

**PCT/CN2024/097916**

| Patent document cited in search report | | | Publication date (day/month/year) | Patent family member(s) | | | Publication date (day/month/year) |
|---|---|---|---|---|---|---|---|
| CN | 116722198 | A | 08 September 2023 | None | | | |
| CN | 104112835 | A | 22 October 2014 | JP | 2014211974 | A | 13 November 2014 |
| | | | | JP | 6163847 | B2 | 19 July 2017 |
| | | | | KR | 20140125305 | A | 28 October 2014 |
| | | | | KR | 101589811 | B1 | 28 January 2016 |
| CN | 217768461 | U | 08 November 2022 | None | | | |
| CN | 107204415 | A | 26 September 2017 | None | | | |
| CN | 114937818 | A | 23 August 2022 | None | | | |
| JP | 2016219382 | A | 22 December 2016 | JP | 6602050 | B2 | 06 November 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310802063